# EUROPÄISCHE PATENTSCHRIFT

(11) **EP 0 519 263 B1**
(45) Veröffentlichungstag und Bekanntmachung des Hinweises auf die Patenterteilung: **11.01.1995**
(21) Anmeldenummer: 92109310.0
(22) Anmeldetag: 02.06.1992
(51) Int. Cl.: F16L 5/02

(54) **Abdichtelement**
Sealing element
Elément d'étanchéité

(30) Priorität: 15.06.1991 DE 9107406 U
(43) Veröffentlichungstag der Anmeldung: 23.12.1992
(73) Patentinhaber: THYSSEN POLYMER GMBH, 81671 München (DE)
(72) Erfinder: Bauer, Peter, W-8441 Konzell (DE); Helf, Walter, W-8440 Straubing (DE)

(56) Entgegenhaltungen:
- EP-A- 0 355 270
- DE-U- 8 429 625
- DE-U- 8 527 622
- DE-U- 8 809 629

## Beschreibung

Die Erfindung bezieht sich auf ein Abdichtelement für Rohre unterschiedlichen Durchmessers, in denen Kabel in getrennten Durchführungen und von unterschiedlichem Durchmesser verlegt sind, mit einer oberen und einer unteren gegenseitig durch Spannelemente verspannbaren Druckplatte.

Solche Abdichtelemente für mehrere Kabel bzw. Rohre sind an sich bekannt. So zeigt beispielsweise die DE OS 39 05 464 ein Abdichtelement bei dem ein Rohr oder Kabel unterschiedlichen Durchmessers hindurchgeführt werden kann. Auch die DE OS 32 13 414 zeigt ein solches Abdichtelement. Abdichtelemente für mehrere Kabel sind beispielsweise durch die DE OS 34 43 284 bekanntgeworden. Diese Abdichtelemente bestehen aus einer Abschlußplatte und einem Stopfen aus Gummi oder Kunststoff, durch die Kabel oder Rohre hindurchgezogen sind. Dadurch ist ein dichter Abschluß des Rohres nach außen gesichert. Das DE GM 84 29 625, eine Abdichtscheibe für Mehrfachrohre in Kabelkanalrohren betreffend, zeigt einen der Abdichtung dienenden flexiblen Ring, der zwischen zwei Spannscheiben angeordnet ist. Dabei sind zwei Spannglieder vorgesehen, die zwei Druckscheiben gegeneinander verspannen, so daß der flexible Ring nach außen an die Rohrwandung gedrückt wird.

Mit diesen Abdichtelementen lassen sich nur bestimmte Kabel bzw. Einzugrohre abdichten. Bei Mehrfachbelegungen von Kabelkanalrohren, die auch nachträglich vorgenommen werden, ergeben sich Probleme beim Ausziehen der Kabel zum Zwecke der Mehrfachbelegung. Um ein bereits vorhandene Kabelkanalrohr trotzdem mehrfach nutzen zu können, wird ein durch ein Steg verbundenes Doppelrohr, zusätzlich zu dem bereits sich im Kabelkanalrohr befindlichen Kabel, eingeschoben.

Die in den Ansprüchen beschriebene Erfindung löst die Aufgabe, eine sichere Abdichtung mit nur einem Abdichtelement zu erzielen und zwar für unterschiedliche Kabeldurchmesser und auch zusätzlich einziehbare Kabel oder Rohre, die untereinander auch unterschiedliche Durchmesser aufweisen können.

Die mit der Erfindung erzielten Vorteile liegen vor allem in der leichten Handhabung und der Möglichkeit, die Durchführungen auch an Kabelrohre unterschiedlichen Durchmessers, auch solche mit Mehrfachbelegung und nachträglich eingezogenen Kabeln und Rohren sicher abzudichten.

Die Erfindung ist nachstehend anhand eines in den Abbildungen dargestellten Ausführungsbeispiels näher erläutert.

Es zeigt:

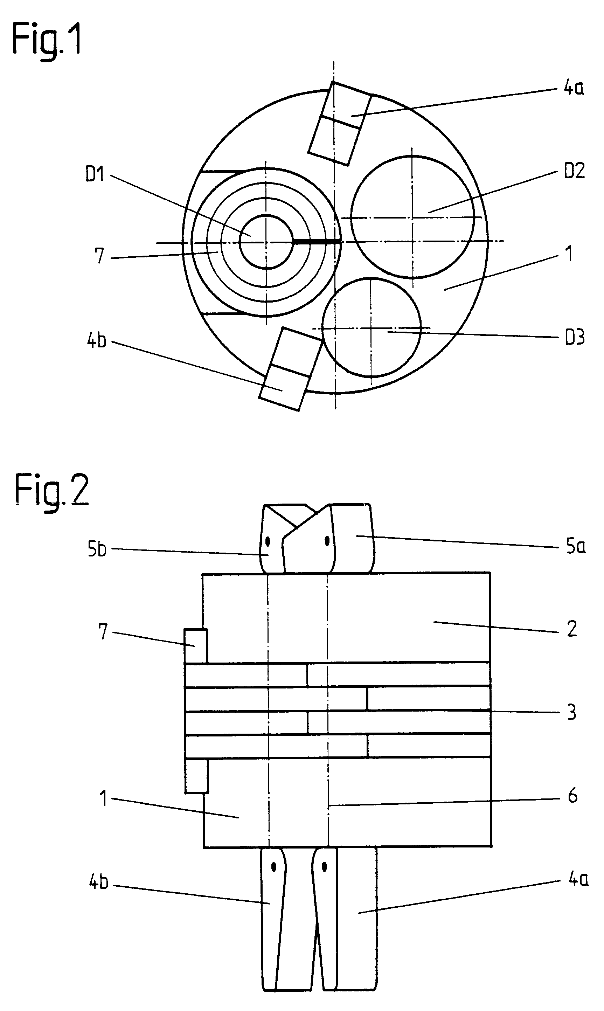

- Fig. 1: eine Draufsicht
- Fig. 2: eine Seitenansicht des Abdichtelementes

Das Abdichtelement besteht im wesentlichen aus einer oberen Druckplatte 1 und einer unteren Druckplatte 2 zwischen denen mehrere, aus einem Elastomer bestehende, geschlitzte Abdichtscheiben 3, angeordnet sind. Die Verspannung wird nach Einführung des Abdichtelementes in das nicht dargestellte Rohrende, durch Umlegen der jeweiligen äußeren Spannknebel 4a und 4b bzw. 5a und 5b vorgenommen. Dazu sind die beiden oberen und unteren Spannknebel 4a,b und 5a,b mit einer Achse 6 verbunden. Die Durchführung D1 ist mit einem Druckplatteneinsatz 7 versehen, der geschlitzt ist und verschiedene Sollbruchstellen für unterschiedliche Kabeldurchmesser aufweist.

Die beiden Durchführungen D2 und D3 weisen unterschiedlichen Durchmesser auf und können noch zusätzlich an unterschiedliche Kabel- bzw. Rohrdurchmesser angepaßt werden. Bei Mehrfachbelegung werden diese nachträglich durch beide Durchführungen D2 bzw. D3 geführt. Die Lage dieser nachträglich eingezogenen Kabel bzw. Rohre kann beliebig sein; denn durch Umdrehen des Abdichtelementes kann der Lage der nachträglich eingezogenen Kabel Rechnung getragen werden.

## Patentansprüche

1. Abdichtelement für Rohre unterschiedlichen Durchmessers, in denen Kabel in getrennten Durchführungen und von unterschiedlichem Durchmesser verlegt sind, mit einer oberen und einer unteren gegenseitig durch Spannelemente verspannbaren Druckplatte, **dadurch gekennzeichnet, daß** zwischen den Druckplatten (1) (2) Abdichtscheiben (3) angeordnet sind und die Spannelemente (4,5) auf der oberen und unteren Druckplatte (1,2) vorgesehen und mit einer Achse (6) miteinander verbunden sind.

2. Abdichtelement nach Anspruch 1, **dadurch gekennzeichnet , daß** ein Druckplatteneinsatz (7) auf die Durchführung (D1) in die Druckplatte (1) und (2) geschoben wird, dieser Druckplatteneinsatz geschlitzt ist und mehrere konzentrische Sollbruchstellen aufweist.

3. Abdichtelement nach Anspruch 1 und 2, **dadurch gekennzeichnet,** daß zwei Spannelemente (4a,4b) und (5a,5b) auf der oberen und unteren Druckplatte (1,2) angeordnet sind.

4. Abdichtelement nach Anspruch 1 bis 3, **dadurch gekennzeichnet.** daß die Abdichtscheiben (3) geschlitzt ausgebildet sind.

## Claims

1. Sealing element for pipes having different diameters, with cables laid in said pipes within separate lead-throughs having different diameters,said sealing element being provided with an upper and a lower thrust plate which can be reciprocally tensioned by means of tensioning elements, **characterized in that** sealing disks (3) are arranged between said thrust plates (1) (2) and said tensioning elements (4, 5) are provided on the upper and lower thrust plate (1, 2) and are interconnected by an axle (6).

2. Sealing according to claim 1, **characterized in that** a thrust plate insert (7) is pushed onto the lead-through (D1) into said thrust plate (1) and (2), that said thrust plate insert is slotted and has several concentric pierceable points.

3. Sealing element according to claims 1 and 2, **characterized in that** two tensioning elements (4a,4b) and (5a,5b) are arranged on said upper and lower thrust plate (1,2).

4. Sealing element according to claims 1 to 3, **characterized in that** said sealing disks (3) have a slotted configuration.

## Revendications

1. Elément d'étanchéification pour tuyaux de diamètres divers, dans lesquels sont posés des câbles de différents diamètres dans des passages séparés, avec une plaque de pression supérieure et inférieure susceptible d'être serrée l'une contre l'autre au moyen de tendeurs, **caractérisé en ce que** des joints plats (3) sont disposés entre les plaques de pression (1) et (2) et que des tendeurs (4,5) sont prévus sur la plaque de pression supérieure et inférieure 81,2) et reliés entre-eux au moyen d'un axe (6).

2. Elément d'étanchéification selon la revendication 1, **caractérisé en ce qu'un** insert (7) est placé sur le passage (D1) dans la plaque de pression (1) et (2), que cet insert est fendu et présente plusieurs points de rupture concentriques.

3. Elément d'étanchéification selon la revendication 1 et 2, **caractérisé en ce que** deux tendeurs (4a, 4b) et (5a, 5b) sont disposés sur la plaque de pression supérieure et inférieure (1,2).

4. Elément d'étanchéification selon la revendication 1 à 3, **caractérisé en ce que** les joints plats (3) sont fendus.
